# EUROPEAN PATENT SPECIFICATION

(11) **EP 3 375 402 B1**
(45) Date of publication and mention of the grant of the patent: **04.05.2022**
(21) Application number: 17161204.7
(22) Date of filing: 15.03.2017
(51) Int. Cl.: A61C 5/82, A61C 9/00, A61C 13/00

(54) **METHOD FOR SCANNING AN ABUTMENT AND KIT OF PARTS**
VERFAHREN ZUM ABTASTEN EINES STÜTZELEMENTS UND KIT
PROCÉDÉ DE BALAYAGE D'UNE BUTÉE ET KIT DE PIÈCES

(43) Date of publication of application: 19.09.2018
(73) Proprietor: Coltène/Whaledent AG, 9450 Altstätten (CH)
(72) Inventor: Schlüter, Martin, 88239 Wangen (DE); Sabrosa, Carlos Eduardo, 22440-030 Rio de Janeiro (BR)
(74) Representative: Hepp Wenger Ryffel AG

(56) References cited:
- EP-A1- 1 618 853
- JP-A- 2002 065 706
- Sören Hansen: "Implant superstructures: fast and cost-effective", , 1 November 2008 (2008-11-01), XP055383841, Retrieved from the Internet: URL:http://www.sirona.com/ecomaXL/files/CE REC_Zeitung_13_englisch.pdf [retrieved on 2017-06-21]
- Dr Nicolas Boutin: "Prosthetic-Driven Implant Planning Anterior Multiple Implant- supported Restoration in the Aesthetic Zone", , 1 September 2016 (2016-09-01), XP055384010, Retrieved from the Internet: URL:http://www.carestreamdental.com/Images FileShare/.sitecore.media_library.Files.CS _Solutions.CS_Solutions_for_Implants.Dr-Bo utin-Clinical-Case.pdf [retrieved on 2017-06-22]

## Description

The invention relates to a method for scanning an abutment, and a kit of parts for use in a method for scanning an abutment.

To replace defective teeth they are commonly replaced by dental restorations. Dental restorations are built by an implant, an abutment and a replacement tooth such as a crown. The implant is placed in the jaw bone. The abutment is attached to the implant connecting the implant to a replacement tooth, which is positioned on the abutment.

For the scanning of a dental abutment in an implant, various methods exist. A scanning abutment is positioned into an implant, which is located in a defect site. The scanning abutment is scanned in order to acquire 3D data of the abutment. The dental restauration is modelled from the acquired 3D data. The scanning abutment is however not the abutment of the final dental restauration and needs to be replaced by a restauration abutment. This may lead to inaccuracies as the final abutment is not identical to the scanning abutment or the final abutment is not identically positioned in the implant. Moreover, each implant system requires its own scanning abutment making handling of various systems cumbersome for dentists.

Alternatively, scan bodies or locators are positioned in or on an abutment and used to reference the scan data acquired from scanning the abutment including a scan body. Again, each systems requires its accessories.

EP 1 618 853 A1 describes for example a compensating part for the measurement of dental restorations with an attachment fixed to an implant placed in a jaw or to a manipulating implant provided in a working model.

The aforementioned methods are disadvantageous as either the scanning abutment needs to be replaced or the scan body needs to be removed from the defect site. Additionally, the scanning abutment, scan bodies and locators are at risk to be wetted with saliva.

In an article by Sören Hansen, "Implant superstructures: fast and cost-effective",retrievable from the Internet at http://www.sirona.com/ ecomaXL/files/CEREC_Zeitung_13_englisch.pdf a method for scanning a final abutment with the features a1) and b) according to claim 1 is disclosed.

It is therefore an objective of the present invention to avoid the disadvantages of the known methods for scanning a dental situation, and specifically to provide a method for scanning a dental situation in implantology. These objectives are solved with the method according to claim 1 and a kit of parts according to claim 7.

According to the present invention the method for scanning an abutment comprises the step a) of positioning a rubber dam below an exposed portion of an abutment.

Suitable rubber dams for use in the context of the present invention are readily available in the market; more rigid ones are preferred. More specifically, suitable rubber dams preferably have comply with the following specifications:
- Thickness in the range of 0.002-0.060", preferably 0.004-0.040", more preferably 0.006-0.020"; and/or
- Tear Strength in the range of 10-500 Psi, preferably 30-300 Psi, more preferably 50-200 Psi when measured according to ASTM D624-00 (Type C); and/or
- Ultimate elongation in the range of 50-1500%, preferably 200-1000%, more preferably 500-700% when measured according to ASTM D412-15a; and/or
- Tensile strength at ultimate elongation in the range of 50-7000 Psi, preferably 75-5000 Psi, more preferably 100-4000 Psi when measured according to ASTM D412-15a; and/or a tensile strength at 100% elongation in the range of 5-300 Psi, preferably 7-250 Psi, more preferably 10-200 Psi when measured according to ASTM D412-15a.

The abutment is positioned in an implant for a dental restauration. The method further comprises the step b) of scanning of the abutment. Synonyms for rubber dam are e.g. dental dam and Kofferdam. The method according to the present invention allows scanning of an abutment without using a scan body or a scanning abutment. The method is therefore easier to perform, independent of a specific implant system and more accurate, as there is no need to remove a scan body or replace the scanning abutment for the restauration abutment. The rubber dam positioned below the exposed portion of the abutment keeps the abutment dry so wetting of the abutment does not occur e.g. with salvia. The abutment is scannable in an easy and convenient way. Drying of the abutment is not necessary in order to scan the abutment.

The abutment according to the invention is a restauration abutment, meaning the abutment to be scanned is the final or any type of abutment of the dental restauration. This is in contrast to scanning abutments which are used for scanning the defect site only. Scanning abutments are replaced by restauration abutments after the scanning step.

The rubber dam is positioned in such a way, that a geometrical structure associated with the abutment is scannable. In this context, the abutment including the geometrical structure serves as positioning reference. Scanning of the geometrical structure provides improved data quality as the scan data can be referenced to the specific geometrical structure. Thus, size and geometry of the final dental restauration may be constructed with respect to the geometrical structure associated with the abutment.

The geometrical structure may be any structure that allows using the geometrical structure as positioning reference in a scanning step. The geometrical structure is preferably a socle, or a ledge, or a protrusion. The geometrical structure could even be the scan body. The aforementioned specific geometrical structures simplify the process of scanning the abutment, referencing and calculation of the dental restauration.

The geometrical structure may be provided in a portion of the exposed portion of the abutment. In this connection, the portion, in which the geometrical structure is provided, is directed towards the implant; e.g. the portion represents one third of the exposed portion of the abutment adjacent to the implant. In such a way, scan data can be referenced with regard to the geometrical structure which is located in proximity to the rubber dam. The rubber dam represents the beginning of the exposed portion of the abutment in the scanning step.

The geometrical structure may fully surround the abutment axis in the exposed portion of the abutment, preferably in a subportion of the exposed portion. Due to the good accessibility of the geometrical structure from different scanning angles scanning of the abutment and referencing the scan data to the geometrical structure is improved. In the scanning step redundant data can be collected which improve referencing of the data.

The geometrical structure may be part of the abutment. In other words, the abutment is manufactured containing the geometrical structure, so the abutment and the geometrical structure are one piece (formed integrally). In such a way, the method is less prone to errors as the geometrical structure is in a fixed position.

The method according to the present invention may further comprise after step a) and before step b) a step c). In step c), the abutment is covered with a powder, e.g. a scanning powder if the scanning equipment and/or scanning conditions demand for this. Suitable scanning powders are commercially available, e.g. CEREC Optispray. Preferably, the powder is applied on the abutment by spraying. Application of the powder reduces the optical reflective properties of the abutments resulting in improved quality of the scan data.

The method further comprises that, after step a) and before step b) and before optional step c), a spacer is positioned between the rubber dam and the geometrical structure, wherein the geometrical structure is a protrusion. The positioned spacer holds the rubber dam in place and separates the rubber dam and the abutment in a defined distance. In such a way, scanning of the abutment takes place under controlled conditions (e.g. dry), and the spatial separation of the rubber dam and the abutment avoids interference of the scanning process e.g. caused by a wrongly positioned rubber dam.

The spacer is positioned to fully surround the abutment. Like this, scanning from different scanning angles is improved as the distance between the rubber dam and the abutment is substantially constant. Data collection is improved and potential disturbances in the scanning step are minimized.

The spacer is an O-ring. An O-ring has the advantage that it is cheap, adaptable due to its elastic properties and easy to handle.

In the method according to the present invention, the spacer may be part of the rubber dam. The spacer is positioned between the rubber dam and the geometrical structure in step a). Preferably, an O-ring is part of the rubber dam, so that the O-ring is positioned concomitantly with the rubber dam in step a) of the present invention, which simplifies and accelerates the method.

A further aspect of the invention relates to a kit of parts. The kit of parts comprises at least one rubber dam and at least one o-ring as spacer.

The kit of parts according to the invention provides essential components for a method for scanning an abutment, which is positioned in an implant for a dental restauration. The above outlined advantages for the use of an o-ring as spacer similarly apply.

The kit of parts optionally further comprises instructions for the use of the kit of parts. The instructions for use preferably relate to one of the above methods according to the invention for scanning an abutment including a spacer.

The kit of parts according to the present invention may further comprise at least one abutment, wherein a geometrical structure of the abutment serves as positioning reference in a method for scanning an abutment, preferably according to one of the above methods relating to a spacer.

The kit of parts may further comprise at least one scanning powder and/or at least one rubber dam clamp.

Further aspects and details of the present invention will become apparent from the figures and examples given in the following, which show:
- Fig. 1:: Schematic drawing of an abutment in a dental implant;
- Fig. 2:: Schematic drawing of an abutment in a dental implant covered with a rubber dam;
- Fig. 3:: Schematic drawing of an abutment comprising a geometrical structure in a dental implant covered with a rubber dam;
- Fig. 4:: Schematic drawing of an abutment comprising a protrusion in a dental implant covered with a rubber dam;
- Fig. 5:: Schematic drawing of an abutment comprising a socle in a dental implant covered with a rubber dam;
- Fig. 6:: Schematic drawing of an abutment comprising a protrusion in a dental implant covered with a rubber dam separated by a spacer;
- Fig. 7:: Schematic drawing of an abutment comprising a protrusion in a dental implant covered with a rubber dam separated by a ring;
- Fig. 8:: Schematic drawing of an abutment comprising a protrusion in a dental implant covered with a rubber dam separated by an O-ring;
- Fig. 9:: Flow chart of an embodiment of a method according to the invention;
- Fig. 10:: Flow chart of a further embodiment of a method according to the invention;
- Fig. 11:: Flow chart of a further embodiment of a method according to the invention.

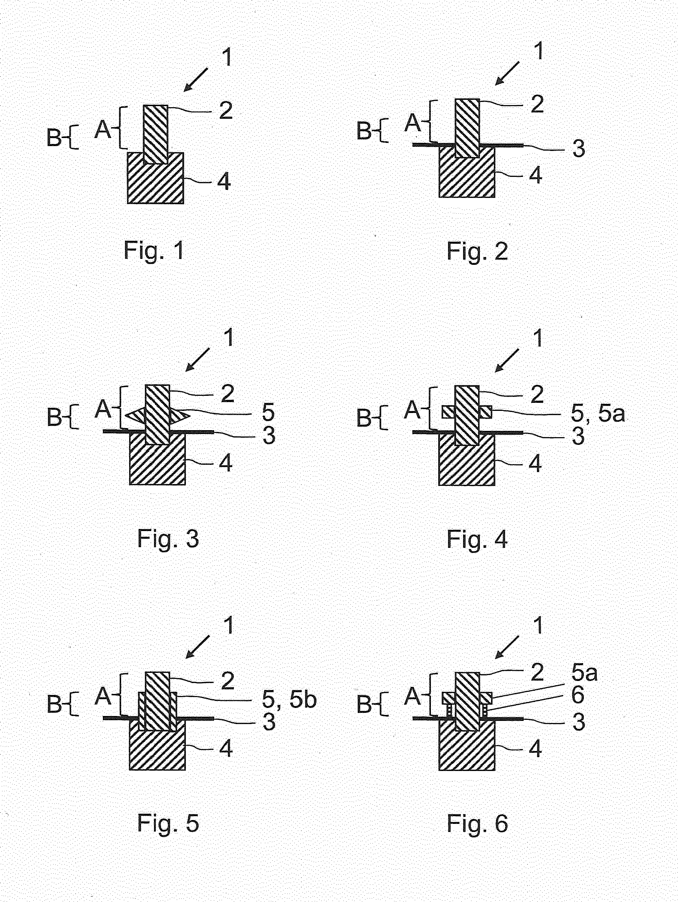

Figure 1 shows a schematic drawing of a dental defect site 1. An abutment 2 is positioned in a dental implant 4. The abutment 2 is the final or any type of abutment of the dental restauration, which is constructed at the defect site 1. The abutment 2 has an exposed portion A. The exposed portion A has a portion B, which is directed towards the implant 4.

Figure 2 shows all elements as outlined above for figure 1. It further shows a rubber dam 3, which is positioned below the exposed portion A of the abutment 2. The rubber dam 3 protects the abutment 2 from being wetted from below, e.g. from the gingiva or the surrounding of the defect site.

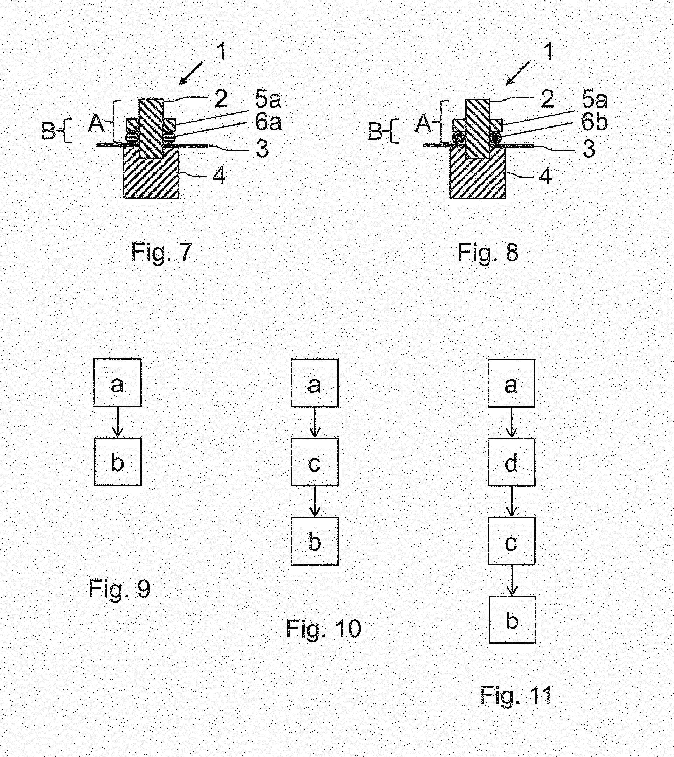

Figure 3 shows all elements as outlined above for figures 1 and 2. It further shows a geometrical structure 5, which is located in a portion B directing towards the implant 4 of the exposed portion A. The rubber dam 3 is positioned below the exposed portion A of the abutment 2 in such a way, that the geometrical structure 5 is scannable in a method according to the invention (cp. figures 9, 10 and 11). The geometrical structure 5 fully surrounds the stem of the abutment 2.

Figure 4 shows all elements as outlined for the figures 1 to 3. However, the geometrical structure 5 is a protrusion 5a. The protrusion 5a fully surrounds the stem of the abutment 2.

Figure 5 shows all elements as outlined for the figures 1 to 3. However, the geometrical structure 5 is a socle 5b.

Figure 6 shows all elements as outlined for figure 4. It further comprises a spacer 6, which is positioned between the protrusion 5a and the rubber dam 3. The spacer 6 separates the rubber dam 3 from the protrusion 5a and keeps the distance between the rubber dam 3 and the protrusion 5a constant.

Figure 7 shows all elements as outlined for figure 6. The spacer 6 is a ring 6a, which is positioned between the protrusion 5a and the rubber dam 3. The ring 6a fully surrounds the abutment 2. The ring 6a keeps the distance between the rubber dam 3 and the protrusion 5a constant around the stem of the abutment. The distance is substantially defined by the diameter of the ring 6a.

Figure 8 shows all elements as outlined for figure 6. The spacer 6 is an O-ring 6b, which is positioned between the protrusion 5a and the rubber dam 3. The O-ring 6b fully surrounds the abutment 2. An O-ring is positionable around the abutment 2 with ease due to its elastic and flexible properties.

Figure 9 shows a flow chart of an embodiment of the method for scanning an abutment according to the invention. The method comprises the steps a) and b). It is referred to the references of figure 2. In step a), a rubber dam 3 is positioned below an exposed portion A of an abutment 2, wherein the abutment 2 is positioned in an implant 4 for a dental restauration. The consecutive step b) comprises scanning of the abutment 2.

Figure 10 shows a flow chart of a further embodiment of the method for scanning an abutment according to the invention. The method comprises the steps a), b) and c), wherein step c) is performed after step a) and before step b). It is referred to the references of figure 2. In step a), a rubber dam 3 is positioned below an exposed portion A of an abutment 2, wherein the abutment 2 is positioned in an implant 4 for a dental restauration. In step c), a scanning powder is sprayed on the abutment to be scanned. The consecutive step b) comprises scanning of the abutment 2.

Figure 11 shows a flow chart of a further embodiment of the method for scanning an abutment according to the invention. The method comprises the step a), step b), optional step c) and step d). Step a) is firstly performed, followed by step d) and optionally followed by step c). Finally, step b) is performed. It is referred to the references of figure 8. In step a), a rubber dam 3 is positioned below an exposed portion A of an abutment 2, wherein the abutment 2 is positioned in an implant 4 for a dental restauration. The abutment comprises protrusions 5a located in the portion B directing towards the implant 4 of the exposed portion A of the abutment 2. In step d), an O-ring 6b is positioned between the rubber dam 3 and the protrusion 5a. The O-ring 6B fully surrounds the abutment 2. The rubber dam 3 and the protrusion 5a are separated in a defined distance by the O-Ring 6b. In such a way, the protrusion 5a can serves as an exposed and accessible reference for scanning the abutment 2. The scan data acquired in step b) of the abutment can be thus referenced with respect to the protrusion 5a so that the dental restauration can be modelled with respect to the protrusion 5a of the abutment 2. Before step b) and after step d), the abutment can optionally be covered with a scanning powder to optimized scanning of the abutment by adapting the reflective properties of the abutment to be scanned.

## Claims

1. Method for scanning an abutment (2), comprising the steps
a1) positioning a rubber dam (3) below an exposed portion (A) of an abutment (2), wherein the abutment (2) is positioned in an implant (4) for a dental restauration, and
a2) positioning of a spacer (6) between the rubber dam (3) and a geometrical structure (5),
wherein the geometrical structure (5) is a protrusion (5a), and
wherein the spacer (6) is positioned to surround the abutment (2), and
wherein the spacer (6) is an O-ring (6b)
b) scanning of the abutment (2),
wherein the rubber dam (3) is positioned in such a way, that a geometrical structure (5) of the abutment (2) is scannable, wherein the geometrical structure (5) serves as positioning reference,
and wherein the abutment (2) is the final restauration abutment.

2. Method according to claim 1, wherein the geometrical structure (5) is at least one of a protrusion (5a) or a socle (5b) .

3. Method according to claim 1 or 2, wherein the geometrical structure (5) is provided in a portion (B) of the exposed portion (A) of the abutment (2), wherein the portion (B) is directed towards the implant (4).

4. Method according to any of claims 1 to 3, wherein the geometrical structure (5), preferably fully, surrounds the abutment axis in the exposed portion of the abutment, preferably in a subportion of the exposed portion adjacent to the implant (4).

5. Method according to any of claims 1 to 4, further comprising after step a) and before step b) a step c), wherein the abutment (2) is covered, preferably sprayed, with a powder.

6. Method according to claim 1, wherein the spacer (6) is part of the rubber dam (3), wherein the spacer (6) is positioned between the rubber dam (3) and the geometrical structure (3) in step a).

7. Kit of parts for use in a method for scanning an abutment (2),
wherein a spacer (6) is positioned between a rubber dam (3) and a geometrical structure (5),
wherein the geometrical structure (5) is a protrusion (5a), and
wherein the spacer (6) is positioned to at least partially surround the abutment (2), and
wherein the kit of parts comprises
- at least one rubber dam (3),
- at least one o-ring (6b) as spacer,
- optionally instructions for use, particularly for a method according to claim 6.

8. Kit of parts according to claim 7, further comprising
- at least one abutment (2), wherein a geometrical structure (5) of the abutment serves as positioning reference in a method for scanning an abutment, particularly according to any of claims 1 to 7, and/or
- at least one scanning powder; and/or
- at least one rubber dam clamp.

## Patentansprüche

1. Verfahren zum Scannen eines Abutments (2), umfassend die Schritte
a1) Positionieren eines Kofferdams (3) unter einem freiliegenden Abschnitt (A) eines Abutments (2), wobei das Abutment (2) in einem Implantat (4) für eine Zahnrestauration positioniert wird, und
a2) Positionierung eines Abstandshalters (6) zwischen dem Kofferdam (3) und einer geometrischen Struktur (5),
wobei die geometrische Struktur (5) eine Ausstülpung (5a) ist, und
wobei der Abstandshalter (6) so positioniert ist, dass er das Widerlager (2) umgibt, und
wobei der Abstandshalter (6) ein O-Ring (6b) ist
b) Abtasten des Widerlagers (2),
wobei der Kofferdam (3) so positioniert ist, dass eine geometrische Struktur (5) des Abutments (2) abtastbar ist, wobei die geometrische Struktur (5) als Positionierungsreferenz dient,
und wobei das Abutment (2) das endgültige Restaurationsabutment ist.

2. Verfahren gemäss Anspruch 1, wobei die geometrische Struktur (5) mindestens eine von einem Vorsprung (5a) oder einem Sockel (5b) ist.

3. Verfahren gemäss Anspruch 1 oder 2, wobei die geometrische Struktur (5) in einem Teil (B) des freiliegenden Teils (A) des Abutments (2) vorgesehen ist, wobei der Teil (B) zum Implantat (4) hin gerichtet ist.

4. Verfahren gemäss einem der Ansprüche 1 bis 3, wobei die geometrische Struktur (5) die Abutmentachse im freiliegenden Abschnitt des Abutments, vorzugsweise in einem Teilbereich des freiliegenden Abschnitts neben dem Implantat (4), vorzugsweise vollständig umgibt.

5. Verfahren gemäss einem der Ansprüche 1 bis 4, ferner umfassend nach Schritt a) und vor Schritt b) einen Schritt c), bei dem die Schnapp-Kupplung (2) mit einem Pulver bedeckt, vorzugsweise besprüht, wird.

6. Verfahren gemäss Anspruch 1, wobei der Abstandshalter (6) Teil des Kofferdams (3) ist, wobei der Abstandshalter (6) zwischen dem Kofferdamm (3) und der geometrischen Struktur (3) in Schritt a) positioniert wird.

7. Satz Teile zur Verwendung in einem Verfahren zum Scannen eines Abutments (2),
wobei ein Abstandshalter (6) zwischen einem Kofferdam (3) und einer geometrischen Struktur (5) angeordnet ist,
wobei die geometrische Struktur (5) ein Vorsprung (5a) ist, und
wobei der Abstandshalter (6) so angeordnet ist, dass er das Widerlager (2) zumindest teilweise umgibt, und
wobei der Satz Teile umfasst
- mindestens einen Kofferdam (3),
- mindestens einen O-Ring (6b) als Abstandshalter,
- optional eine Gebrauchsanweisung, insbesondere für ein Verfahren nach Anspruch 6.

8. Satz Teile gemäss Anspruch 7, ferner enthaltend
- mindestens ein Abutment (2), wobei eine geometrische Struktur (5) des Abutments als Positionierungsreferenz bei einem Verfahren zum Scannen eines Abutments, insbesondere nach einem der Ansprüche 1 bis 7, dient, und/oder
- mindestens ein Abtastpulver; und/oder
- mindestens eine Kofferdamklammer.

## Revendications

1. Procédé de scannage d'un pilier (2), comprenant les étapes suivantes
a1) positionnement d'un barrage en caoutchouc (3) sous une partie exposée (A) du pilier (2), dans lequel le pilier (2) est positionné dans un implant (4) pour une restauration dentaire, et
a2) positionnement d'une entretoise (6) entre le barrage en caoutchouc (3) et une structure géométrique (5),
dans lequel la structure géométrique (5) est un saillie(5a), et
dans lequel l'entretoise (6) est positionnée pour entourer le pilier (2), et
dans lequel l'entretoise (6) est un joint torique (6b)
b) le scannage de la butée (2),
dans lequel le barrage en caoutchouc (3) est positionné de telle manière que la structure géométrique (5) du pilier (2) peut être scannée, dans lequel la structure géométrique (5) sert de référence de positionnement,
et dans lequel le pilier (2) est le pilier de restauration finale.

2. Procédé selon la revendication 1, dans lequel la structure géométrique (5) est au moins un parmi une saillie (5a) ou un socle (5b).

3. Procédé selon la revendication 1 ou 2, dans lequel la structure géométrique (5) est prévue dans une partie (B) de la partie exposée (A) du pilier (2), la partie (B) étant dirigée vers l'implant (4).

4. Procédé selon l'une quelconque des revendications 1 à 3, dans lequel la structure géométrique (5) entoure, de préférence entièrement, l'axe du pilier dans la partie exposée du pilier, de préférence dans une sous-partie de la partie exposée adjacente à l'implant (4).

5. Procédé selon l'une quelconque des revendications 1 à 4, comprenant en outre, après l'étape a) et avant l'étape b), une étape c), dans laquelle le pilier (2) est recouvert, de préférence pulvérisé, d'une poudre.

6. Procédé selon la revendication 1, dans lequel l'entretoise (6) fait partie du barrage en caoutchouc (3), dans lequel l'entretoise (6) est positionnée entre le barrage en caoutchouc (3) et la structure géométrique (3) à l'étape a).

7. Kit de pièces à utiliser dans un procédé de scannage d'un pilier (2),
dans lequel une entretoise (6) est positionnée entre un barrage en caoutchouc (3) et une structure géométrique (5), dans lequel la structure géométrique (5) est une saillie (5a), et
dans lequel l'entretoise (6) est positionnée pour entourer au moins partiellement le piler (2), et
dans lequel le kit de pièces comprend
- au moins un barrage en caoutchouc (3),
- au moins un joint torique (6b) en tant qu'entretoise,
- éventuellement des instructions d'utilisation, en particulier pour un procédé selon la revendication 6.

8. Kit de pièces selon la revendication 7, comprenant en outre
- au moins un pilier (2), dans laquelle une structure géométrique (5) du pilier sert de référence de positionnement dans un procédé de scannage d'un pilier, en particulier selon l'une quelconque des revendications 1 à 7, et/ou
- au moins une poudre de scannage ; et/ou
- au moins une pince pour barrage en caoutchouc.
